# FASCICULE DE BREVET EUROPEEN

(11) **EP 2 772 035 B1**
(45) Date de publication et mention de la délivrance du brevet: **26.08.2015**
(21) Numéro de dépôt: 12790593.3
(22) Date de dépôt: 18.10.2012
(51) Int. Cl.: H04L 29/06

(54) **PROCEDE DE GESTION D'UNE COMMUNICATION DESTINEE A UN UTILISATEUR ET SERVEUR D'APPLICATION**
VERFAHREN ZUR VERWALTUNG EINER KOMMUNIKATION FÜR EINEN BENUTZER UND ANWENDUNGSSERVER
METHOD FOR MANAGING A COMMUNICATION INTENDED FOR A USER, AND APPLICATION SERVER

(30) Priorité: 28.10.2011 FR 1159841
(43) Date de publication de la demande: 03.09.2014
(73) Titulaire: Orange, 75015 Paris (FR)
(72) Inventeur: LABRANCHE, Miguel, F-94380 Bonneuil Sur Marne (FR); TOSSOU, Bruno, F-91230 Montgeron (FR); KANOUTE, Mbemba, F-92210 Saint Cloud (FR)
(74) Mandataire: Fontenelle, Sandrine
(86) Numéro de dépôt international: PCT/FR2012/052370
(87) Numéro de publication internationale: WO 2013/060967

(56) Documents cités:
- EP-A2- 1 193 944
- US-A1- 2010 303 222

## Description

### Arrière-plan de l'invention

L'invention se rapporte au domaine général des télécommunications.

Elle concerne plus particulièrement la gestion et le routage d'une communication destinée à un utilisateur par un serveur d'application d'un coeur de réseau de voix sur IP (ou VoIP pour Voice Over IP) tel que par exemple un coeur de réseau IMS (IP Multimedia Subsystem), dans un contexte où plusieurs terminaux sont reliés à un même identifiant de l'utilisateur sur le coeur de réseau de voix sur IP.

L'invention a ainsi une application privilégiée mais non limitative dans le cadre du service ICS (IMS Centralized Service) développé par le standard 3GPP, et décrit notamment dans le document 3GPP TS 23.292 intitulé « Technical Spécification Group Services and System Aspects ; IP Multimedia Subsystem centralized services ; Stage 2 », Release 11, v11.0.0, juin 2011.

De façon générale, le service ICS vise à offrir, via un coeur de réseau IMS, des services multimédia à un utilisateur mobile indépendamment du réseau d'accès avec lequel l'utilisateur est connecté (i.e. réseau d'accès à commutation de circuits ou de paquets). Les utilisateurs de réseaux d'accès à commutation de circuits peuvent ainsi bénéficier de nouveaux services IMS tout en continuant de bénéficier des services traditionnellement offerts par les réseaux d'accès à commutation de circuits, ces services étant maintenant gérés par le coeur de réseau IMS.

A cette fin, le service ICS s'appuie notamment sur le déclenchement d'un serveur d'application SCC-AS (Service Centralization and Continuity Application Server), en charge d'assurer la continuité des services pour les différents réseaux d'accès. Le serveur SCC-AS a notamment pour fonction de gérer la terminaison de chaque communication transitant par lui en sélectionnant le domaine (commutation de paquets ou de circuits) vers lequel router cette communication. Les fonctionnalités du serveur SCC-AS sont décrites plus en détail dans le document 3GPP TS 24.292 intitulé «Technical Spécification Group Core Network and Terminals; IP Multimedia Core Network Subsystem; Centralized Services; Stage 3 », Release 10, v10.5.0, septembre 2001.

Par ailleurs, le standard 3GPP prévoit la possibilité pour un utilisateur d'enregistrer auprès du coeur de réseau IMS plusieurs adresses de contact en liaison avec un même identifiant de cet utilisateur sur le coeur de réseau (ex. adresse SIP). Ces adresses de contact peuvent être associées à plusieurs terminaux distincts.

Or, si le standard 3GPP prévoit la possibilité de prendre en compte au niveau du serveur SCC-AS l'existence de terminaux multiples liés à un même identifiant dé l'utilisateur sur le coeur de réseau, il ne décrit pas comment ceci peut ou doit être mis en oeuvre.

Le document US 2010/0303222 decrit le preambule de la revendication 1.

### Objet et résumé de l'invention

L'invention répond notamment à ce besoin en proposant un procédé de gestion d'une communication destinée à un utilisateur auquel est attribué un identifiant sur un coeur de réseau de voix sur IP, ce procédé étant mis en oeuvre par un serveur d'application du coeur de réseau de voix sur IP par lequel transite la communication. Conformément à l'invention, ce procédé comprend une étape de sélection dans une base de données, sur réception de la communication, d'un terminal relié à l'identifiant de l'utilisateur en vue de router la communication vers ce terminal, la base de données associant à au moins un terminal enregistré sur le coeur de réseau de voix sur IP et relié à l'identifiant de l'utilisateur au moins une période d'activité de ce terminal sur le coeur de réseau de voix sur IP, et le terminal sélectionné étant associé dans la base à la période d'activité la plus récente.

Corrélativement l'invention vise également un serveur d'application d'un coeur de réseau de voix sur IP, apte à gérer une communication transitant par lui et destinée à un utilisateur auquel est attribué un identifiant sur le coeur de réseau de voix sur IP. Conformément à l'invention ce serveur comprend des moyens, activés sur réception de la communication, de sélection dans une base de données d'un terminal relié à l'identifiant de l'utilisateur en vue de router la communication vers ce terminal, la base de données associant à au moins un terminal enregistré sur lé coeur de réseau de voix sur IP et relié à l'identifiant de l'utilisateur au moins une période d'activité de ce terminal sur le coeur de réseau de voix sur IP, et le terminal sélectionné étant associé dans la base à la période d'activité la plus récente.

On notera que l'invention a une application privilégiée mais non limitative lorsque le coeur de réseau de voix sur IP est un coeur de réseau IMS et le serveur d'application est un serveur SCC-AS du coeur de réseau IMS. L'invention permet ainsi d'enrichir les fonctionnalités du serveur SCC-AS défini dans le standard 3GPP.

Au sens de l'invention, on entend par activité d'un terminal toute activité protocolaire de ce terminal, c'est-à-dire liée à l'échange de messages sur le coeur de réseau de voix sur IP (émission ou réception de message(s)), tels que par exemple des messages conformes au protocole SIP (Session Initiation Protocol). Il peut s'agir notamment d'une période d'activité liée à l'établissement d'un appel (associée à l'envoi ou à la réception d'un message SIP INVITE par exemple), ou à l'échange d'informations entre deux terminaux (associée à l'envoi ou à la réception d'un message SIP OPTIONS) ou entre un terminal et un autre équipement du réseau, ou encore à un enregistrement ou à un dés-enregistrement du terminal (associée à l'envoi d'un message SIP REGISTER ou UNREGISTER), etc.

Ainsi l'invention propose de router une communication entrante en présence de plusieurs terminaux enregistrés en liaison avec un même identifiant d'un utilisateur sur le coeur de réseau de voix sur IP, vers le dernier terminal actif de l'utilisateur, c'est-à-dire vers le terminal associé, dans une base maintenue par le serveur d'application, à la période d'activité la plus récente par rapport à la communication entrante. L'invention favorise de cette façon la joignabilité du terminal, lors de la sélection opérée en vue du routage de la communication.

Au sens de l'invention, une communication destinée à un utilisateur désigne tout échange de données destiné à être mis en oeuvre avec un terminal de cet utilisateur, que ce soit dans le domaine de la commutation de circuits (CS, Circuit Switching) ou dans le domaine de la commutation de paquets (PS, Packet Switching). L'invention permet de gérer non seulement des communications de type appel téléphonique mais également l'échange de données multimédia telles que par exemple des fichiers, des photos, des messages multimédia, des SMS (Short Message Service), etc.

Par ailleurs l'invention est particulièrement avantageuse en ce qu'elle est mise en oeuvre dans le coeur de réseau de voix sur IP au niveau du serveur d'application par lequel transitent les communications dans le coeur de réseau, et ne nécessite par conséquent pas de modification des terminaux à l'origine ou destinataire de la communication. La sélection du terminal est en outre réalisée de façon automatique sans nécessiter l'intervention du terminal à l'origine de la communication ni de l'utilisateur destinataire de la communication.

Préférentiellement, la base de données est mise à jour, par le serveur d'application, périodiquement ou sur détection par le serveur d'application d'une période d'activité d'un terminal relié à l'identifiant de l'utilisateur sur le coeur de réseau de voix sur IP.

L'invention permet ainsi d'avoir une connaissance récente et fiable de l'état d'activité d'un terminal sur le coeur de réseau de voix sur IP et d'adapter le routage de la communication en conséquence.

Dans un mode particulier de réalisation de l'invention, au cours de l'étape de sélection, on sélectionne le terminal relié à l'identifiant de l'utilisateur associé à la période d'activité la plus récente, vérifiant en outre un critère prédéterminé relatif à la nature de l'activité du terminal sur cette période.

Ainsi, selon une première variante, on sélectionne le terminal relié à l'identifiant de l'utilisateur associé à la période d'activité la plus récente en relation avec une communication de même nature que la communication entrante que cherche à router le serveur d'application.

Cette première variante permet d'optimiser le routage en prenant en compte la joignabilité du terminal sélectionné par rapport à la nature de la communication entrante.

Selon une seconde variante, on sélectionne le terminal relié à l'identifiant de l'utilisateur associé à la période d'activité la plus récente en relation avec un établissement d'une communication avec un autre terminal.

La sélection ainsi mise en oeuvre est d'autant plus pertinente que la communication gérée par le procédé selon l'invention est une communication téléphonique entrante. Mais elle permet également, lorsque d'autres types de communications entrantes sont gérés par le procédé selon l'invention, de favoriser le terminal sur lequel l'utilisateur a eu une activité en temps réel.

Autrement dit, dans ce mode de réalisation, on établit une sorte de hiérarchie entre les activités des terminaux, i.e. on considère certaines activités des terminaux, comme par exemple l'échange de messages dans le cadre d'un établissement d'appel, comme prioritaires (ou plus pertinentes) par rapport à d'autres activités lors de la sélection du terminal pour le routage. Ceci permet d'optimiser le routage, en prenant en compte la joignabilité du terminal sélectionné compte tenu de la nature de son activité passée, mais également par rapport à la nature de la communication entrante.

Dans une variante de réalisation, le critère prédéterminé porte sur le type de message émis ou reçu par le terminal durant cette période.

Par exemple, pour un coeur de réseau IMS et une communication entrante de type appel téléphonique, lorsque la base de données comporte deux terminaux reliés à un même identifiant, l'un des terminaux étant associé à une période d'activité pendant laquelle un message SIP INVITE a été émis et l'autre terminal étant associé à une période d'activité pendant laquelle un message SIP OPTIONS a été émis, on favorisera pour la sélection le terminal dont la période d'activité correspond à l'émission d'un message SIP INVITE correspondant à un établissement d'appel.

Dans un mode particulier de réalisation de l'invention, le procédé de gestion comporte en outre une étape de routage de la communication vers le terminal sélectionné.

Dans un mode particulier de réalisation, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en oeuvre dans un serveur d'application ou plus généralement dans un ordinateur, ce programme comportant des instructions adaptées à la mise en oeuvre des étapes d'un procédé de gestion tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également une base de données élaborée par un serveur d'application d'un coeur de réseau de voix sur IP, associant à au moins un terminal enregistré sur le coeur de réseau de voix sur IP et relié à un identifiant d'un utilisateur sur ce coeur de réseau de voix sur IP, au moins une période d'activité de ce terminal sur le coeur de réseau de voix sur IP.

Selon un autre aspect encore, l'invention vise un système d'un coeur de réseau de voix sur IP comprenant :
- un serveur d'application conforme à l'invention ; et
- une base de données conforme à l'invention élaborée par le serveur d'application et utilisée pour sélectionner un terminal vers lequel router une communication transitant par le serveur d'application et destinée à un utilisateur identifié sur le coeur de réseau de voix sur IP.

On peut également envisager, dans d'autres modes de réalisation, que le procédé de gestion, le serveur d'application, la base de données et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système, un serveur d'application et une base de données conformes à l'invention dans un mode particulier de réalisation ;
- la figure 2 représente, de façon schématique, l'architecture matérielle du serveur d'application de la figure 1, dans un mode particulier de réalisation ;
- la figure 3 représente les principales étapes mises en oeuvre au cours du procédé de gestion d'une communication selon l'invention dans lequel il est mis en oeuvre par le serveur d'application de la figure 1 ; et
- la figure 4 représente un exemple de base de données conforme à l'invention.

### Description détaillée d'un mode de réalisation

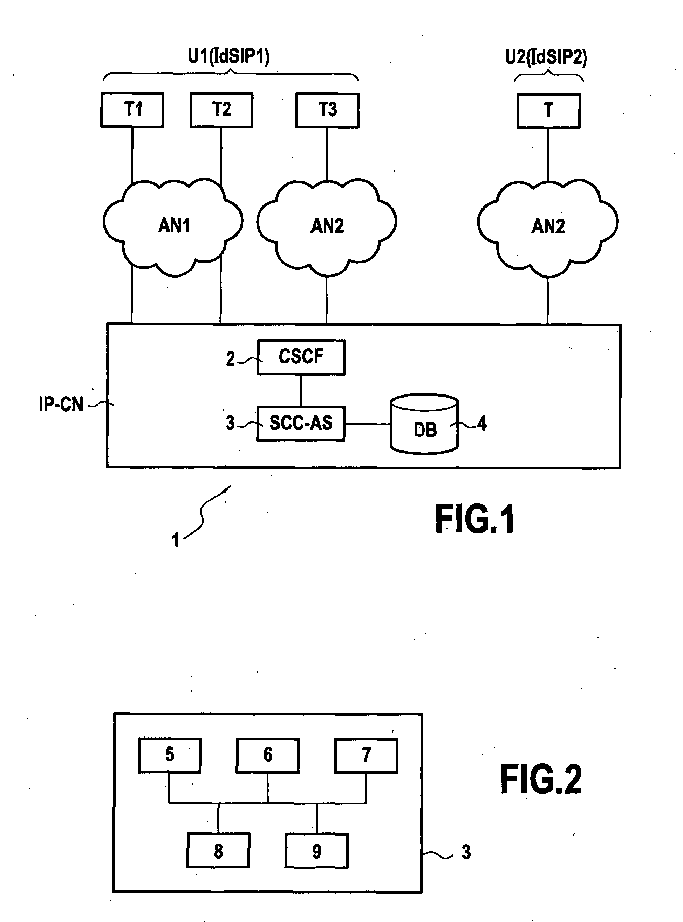

La figure 1 représente, dans son environnement, un système 1 d'un coeur de réseau de voix sur IP, IP-CN, conforme à l'invention, dans un mode particulier de réalisation.

Dans ce mode de réalisation, le coeur de réseau de VoIP, IP-CN, est un coeur de réseau incorporant une architecture IMS et mettant en oeuvre, pour la signalisation échangée dans le coeur de réseau, le protocole d'initiation de session SIP. Les caractéristiques de l'architecture IMS et le protocole SIP sont définis respectivement au niveau des standards 3GPP et de l'IETF, notamment dans les documents 3GPP TS 22.228 « Service requirements for the IP Multimedia Core Network Subsystem (Stage 1) » et IETF RFC 3261 « Session Initiation Protocol ». Ils ne seront de ce fait pas décrits en détail ici.

Cette hypothèse concernant le coeur de réseau n'est toutefois pas limitative. Ainsi, l'invention s'applique également à d'autres architectures de coeur de réseau, comme par exemple à une architecture H323.

De façon connue, le coeur de réseau IMS IP-CN comprend plusieurs entités fonctionnelles, dont notamment :
- une entité CSCF 2 (Call Session Control Function), elle-même composée de plusieurs serveurs (non représentés sur la figure 1) parmi lesquels notamment un serveur S-CSCF (Serving Call Session Control Function) en charge de l'enregistrement des terminaux sur le coeur de réseau IP-CN, et un ou plusieurs serveurs P-CSCF (Proxy Call Session Control Function), points de contact des terminaux avec le coeur de réseau IP-CN ; et
- un ou plusieurs serveurs d'applications (Application Servers) hébergeant et fournissant des services, comme par exemple un serveur de téléphonie TAS (non représenté) et un serveur SCC AS 3 (Service Centralization and Continuity Application Server), participant à l'offre d'un service ICS (IMS Centralized Service) par le coeur de réseau IP-CN. L'architecture et les fonctionnalités d'un serveur SCC AS ainsi que le service ICS sont décrits plus en détail dans les documents 3GPP TS 23.292 et 3GPP TS 24.292 cités précédemment.

Dans l'exemple envisagé ici, on s'intéresse à la gestion d'une communication destinée à un utilisateur U1 disposant de plusieurs terminaux T1, T2 et T3 reliés à un même identifiant IdSIP1 (ex. une adresse SIP) de l'utilisateur U1 sur le coeur de réseau IP-CN, et émise par un utilisateur U2 disposant d'un terminal T. On suppose que l'utilisateur U2 est identifié sur le coeur de réseau IP par l'identifiant IdSIP2.

Chaque terminal T1, T2 et T3 de l'utilisateur U1 est associé respectivement à une adresse de contact AoC1, AoC2 et AoC3 sur le coeur de réseau IP-CN. Les adresses de contact AoC1, AoC2 et AoC3 sont toutes reliées à l'identifiant IdSIP1 de l'utilisateur U1, comme le permet le standard 3GPP.

Dans l'exemple envisagé ici, les terminaux T1 et T2 sont aptes à communiquer via un réseau d'accès AN1, par exemple via un réseau d'accès à commutation de paquets tels que le réseau UMTS (Universal Mobile Télécommunication System) ; le terminal T3 est apte à communiquer via un réseau d'accès AN2, par exemple via un réseau d'accès à commutation de circuits tels que le réseau GSM. De façon similaire, on suppose ici que le terminal U2 dispose d'un terminal unique T, apte à communiquer sur le réseau à commutation de circuits AN2.

Bien entendu, d'autres réseaux d'accès (à commutation de circuits ou de paquets) ou une autre configuration des réseaux d'accès des terminaux T1, T2, T3 et T pourraient être envisagés compte tenu des fonctionnalités de l'architecture IMS considérée. De même l'invention s'applique à un nombre différents de terminaux associés à l'utilisateur U1.

Pour pouvoir bénéficier du service ICS offert par le coeur de réseau IP-CN, les terminaux T, T1, T2 et T3 doivent s'enregistrer auprès du coeur de réseau IP-CN, de façon connue en soi et décrite notamment dans le document 3GPP TS 23.292. L'intervention d'un serveur eMSC (enhanced Mobile Switching Server) faisant la transition entre coeur de réseau « circuits » et le coeur de réseau IMS peut être requise pour les terminaux connectés à des réseaux à commutation de circuits.

Cet enregistrement permet notamment au coeur de réseau IP-CN d'associer dans la base HSS (Home Subscriber Server) du coeur de réseau les adresses de contact AoC1, AoC2 et AoC3 à l'identifiant IdSIP1 de l'utilisateur U1, l'adresse de contact AoC à l'identifiant IdSIP2 de l'utilisateur U2, et de déclencher le cas échéant, des critères iFC (initial Filter Criteria) pour que les terminaux bénéficient du service ICS.

On notera que cet enregistrement marque pour les terminaux T1, T2 et T3 le début d'une potentielle période d'activité au sens protocolaire du terme, c'est-à-dire que suite à cet enregistrement, les terminaux T1, T2 et T3 sont susceptibles d'envoyer et/ou de recevoir un ou des messages, conformes au protocole SIP ici, via le coeur de réseau IP-CN. L'envoi ou la réception d'un message par un terminal via le coeur de réseau IP-CN constitue une période d'activité de ce terminal au sens de l'invention.

Le serveur SCC AS 3 est ici un serveur d'application du système 1 conforme à l'invention. Il est apte à gérer et à router conformément à l'invention, une communication destinée à l'utilisateur U1 et émise par l'utilisateur U2 vers le terminal de l'utilisateur U1 associé à la période d'activité la plus récente.

A cette fin, dans le mode de réalisation décrit ici, le serveur SCC AS 3 élabore et maintient à jour une base de données 4 conforme à l'invention, qui associe à chaque terminal de l'utilisateur U1 enregistré auprès du coeur de réseau IP-CN au moins une période d'activité de ce terminal sur le coeur de réseau de voix sur IP. Cette période d'activité peut notamment être identifiée, dans la base 4, par l'instant d'envoi ou de réception par le terminal du message lors de la période d'activité, et éventuellement par le type de message SIP émis ou reçu durant cette période d'activité.

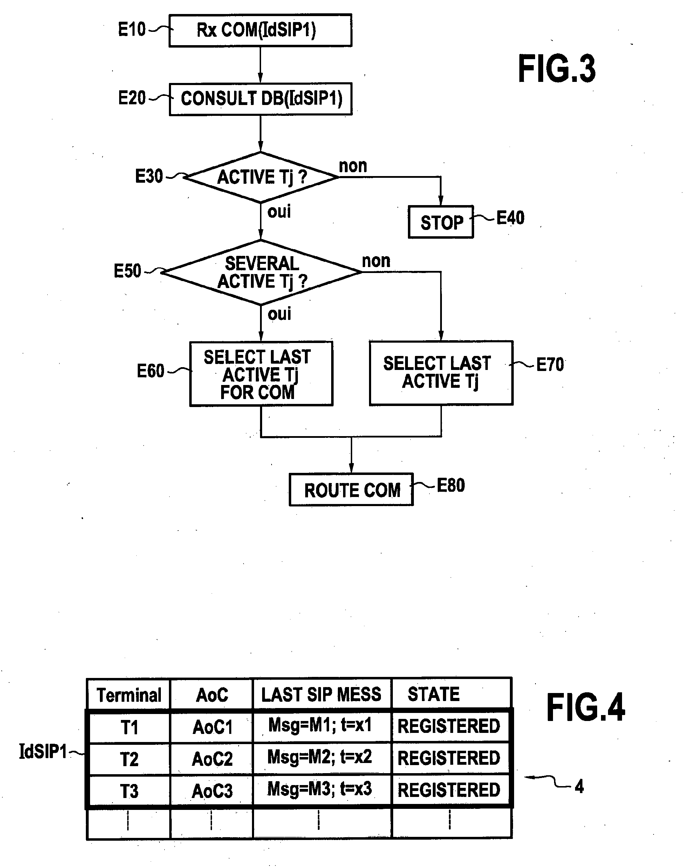

La figure 4 représente un exemple d'une telle base de données. Au sens de l'invention, une base de données désigne tout type de structure permettant de stocker des données, telle qu'une table comme représentée sur la figure 4.

Selon cet exemple, les terminaux T1, T2 et T3 d'adresses de contact respectives AoC1, AoC2 et AoC3 reliées à l'identifiant IdSIPI de l'utilisateur U1, sont enregistrés auprès du coeur de réseau IP-CN : ceci est traduit par la valeur « REGISTERED » de l'état du terminal indiqué à la quatrième colonne intitulée « STATE » de la base.

Par ailleurs, dans cet exemple, seule la dernière période d'activité des terminaux T1, T2 et T3 est enregistrée dans la base 4. Cette période d'activité est identifiée ici pour chaque terminal dans la troisième colonne de la base 4 (intitulée « LAST SIP MESS »), d'une part par le type Msg de message SIP envoyé ou reçu par le terminal durant cette période et d'autre part par l'instant t d'envoi ou de réception de ce message.

Ainsi, selon cet exemple :
- la dernière période d'activité du terminal T1 s'est traduite par l'envoi ou la réception d'un message M1 à l'instant t=x1 ;
- la dernière période d'activité du terminal T2 s'est traduite par l'envoi ou la réception d'un message M2 à l'instant t=x2 ; et
- la dernière période d'activité du terminal T3 s'est traduite par l'envoi ou la réception d'un message M3 à l'instant t=x3.

On suppose ici pour les besoins de l'exemple que M1 est un message SIP INVITE, et que M2 et M3 sont des messages SIP OPTIONS, et que x2<x1<x3. Autrement dit la dernière période d'activité du terminal T1 est postérieure à la dernière période d'activité du terminal T2 et antérieure à la dernière période d'activité du terminal T3.

Avantageusement, cette base de données 4 est maintenue à jour par le serveur SCC-AS 3 de sorte à refléter le plus précisément possible les dernières périodes d'activité des terminaux de l'utilisateur U1. Cette mise à jour est rendue possible car le serveur SCC-AS 3 étant le point d'ancrage de toutes les communications transitant par le coeur de réseau IMS, il est informé en temps réel des périodes d'activité des terminaux T1, T2 et T3.

Dans le mode de réalisation décrit ici, cette mise à jour de la base 4 est réalisée d'une part sur détection d'un changement d'état d'un terminal par le serveur SCC-AS 3 (changement d'état remonté par le serveur S-CSCF de façon connue en soi), tel que par exemple :
- suite à l'enregistrement d'un nouveau terminal relié à l'identifiant IdSIP1, reflété dans la base 4 par l'ajout d'une période d'activité associée à ce nouveau terminal (i.e. nouvelle entrée), cette période étant identifiée par un message SIP REGISTER et par un instant t correspondant à l'instant d'enregistrement du terminal ; ou
- suite au dés-enregistrement de l'un des terminaux T1, T2, T3, reflété dans la base 4 par la suppression de l'entrée correspondante ou par le passage à l'état UNREGISTERED dans la colonne « STATE ».

La base 4 est également mise à jour ici sur détection d'une nouvelle période d'activité associée à un terminal déjà référencé dans la base. Cette nouvelle période d'activité étant plus récente que celle précédemment stockée dans la base pour ce terminal, elle vient remplacer la période d'activité précédemment stockée. De cette sorte, la base 4 ne reflète avantageusement que les périodes d'activité les plus récentes des terminaux.

En variante, une mise à jour périodique peut être envisagée, moyennant le stockage des périodes d'activité détectées, par exemple dans une mémoire vive du serveur d'application.

Le serveur SCC-AS 3 dispose ici de l'architecture matérielle d'un ordinateur, telle que représentée schématiquement sur la **figure 2**. Il comporte notamment un processeur 5, une mémoire vive 6, une mémoire morte 7, des moyens de communication 8 sur le coeur de réseau IMS (intégrant notamment des moyens mettant en oeuvre le protocole SIP) ainsi que des moyens de consultation 9 d'une base de données 4 conforme à l'invention.

La mémoire morte 7 du serveur SCC-AS 3 constitue un support d'enregistrement conforme à l'invention, lisible par le processeur 5 et sur lequel est enregistré un programme d'ordinateur conforme à l'invention, comportant des instructions pour l'exécution des étapes d'un procédé de gestion d'une communication selon l'invention décrites maintenant en référence à la **figure 3**.

La figure 3 représente, sous forme d'ordinogramme, les principales étapes d'un procédé selon l'invention dans un mode particulier de réalisation dans lequel il est mis en oeuvre par le serveur SCC-AS 3 pour la gestion d'une communication émise par le terminal T de l'utilisateur U2 et destinée à l'utilisateur U1. Cette communication est par exemple ici un appel téléphonique.

Toutefois, l'invention ne se limite pas à la gestion de communications téléphoniques ; elle peut également s'appliquer à d'autres types de communications permettant l'échange de données multimédia, aussi bien dans le domaine de la commutation de circuits que dans celui de la commutation de paquets (ex. SMS, message multimédia, etc.). Corrélativement, l'invention ne se limite pas à une communication émise par un terminal T, mais elle peut également s'appliquer lorsque la communication est originaire d'un autre équipement, comme par exemple un serveur, etc.

On suppose pour illustrer ces étapes, que les terminaux T1, T2 et T3 de l'utilisateur U1 sont enregistrés auprès du coeur de réseau IP-CN, et que la base de données 4 est à jour concernant les périodes d'activité de ces terminaux et identique à l'exemple illustré à la figure 4.

Conformément à l'invention, sur réception d'une communication (étape E10) destinée à l'utilisateur U1 (i.e. d'un message de communication destiné à l'utilisateur U1), le serveur SCC-AS 3 du système 1 consulte la base de données 4 à l'aide de l'identifiant IdSIP1 attribué à l'utilisateur U1 (étape E20), afin d'identifier le dernier terminal actif associé à l'utilisateur U1, enregistré auprès du coeur de réseau IP-CN.

On notera qu'en fonction de la nature du terminal T de l'utilisateur U2 (i.e. selon qu'il est apte ou non à communiquer selon le protocole SIP, ici), le message de communication émis par le terminal T ne contient pas nécessairement l'identifiant IdSIP1 de l'utilisateur U1 sur le coeur de réseau IP-CN, mais il peut contenir un identifiant de l'utilisateur U1 sur le réseau d'accès AN2, comme par exemple un numéro de téléphone. Toutefois, lors du transit de ce message de communication par le coeur de réseau IP-CN, les entités de contrôle CSCF du coeur de réseau substituent, de façon connue en soi, l'identifiant de U1 contenu dans le message par l'identifiant IdSP1 de l'utilisateur U1 sur le coeur de réseau IP-CN, stocké dans le serveur HSS.

Ainsi, sur réception du message de communication éventuellement modifié et contenant l'identifiant IdSP1 de l'utilisateur U1, le serveur SCC-AS 3 interroge la base de données 4 pour déterminer dans un premier temps s'il existe un terminal associé à l'identifiant IdSIP1 et enregistré auprès du coeur de réseau (étape E30).

Si la base 4 indique (E30, non) qu'aucun terminal associé à l'identifiant IdSIP1 n'est enregistré (et donc potentiellement actif), un message de non disponibilité est envoyé par le serveur SCC AS 3 au terminal T (étape E40) lui indiquant l'échec de la communication.

Dans le cas contraire (E30, oui), la base de données 4 est interrogée pour déterminer (étape E50) si plusieurs terminaux associés à l'identifiant IdSIP1 sont simultanément enregistrés.

Dans l'exemple envisagé ici, les trois terminaux T1, T2 et T3 sont actuellement enregistrés auprès du coeur de réseau (E50, oui).

Conformément à l'invention, le serveur SCC-AS 3 sélectionne pour router la communication, le dernier terminal actif parmi ces terminaux, c'est-à-dire celui qui est associé dans la base 4 à la période d'activité la plus récente au moment de l'interrogation de la base 4 par le serveur SCC-AS 3 (ou en variante au moment de la réception ou du démarrage du traitement par le serveur SCC-AS 3 de la communication émise par le terminal T).

Dans le mode de réalisation envisagé et illustré par la figure 3, on suppose en outre que le serveur SCC-AS 3 sélectionne parmi les terminaux enregistrés et répertoriés dans la base 4 un terminal qui vérifie en outre un critère prédéterminé relatif à la nature de l'activité du terminal pendant sa dernière période d'activité.

L'ajout de cette contrainte vise à favoriser ici la sélection par le serveur SCC-AS 3 d'un terminal correspondant à un message de même nature que la communication établie par le terminal T de l'utilisateur U2.

En l'espèce ici, on s'intéresse à un l'établissement d'une communication téléphonique de sorte que le serveur SCC-AS 3 est configuré pour sélectionner le dernier terminal actif répertorié dans la base 4 ayant, durant sa dernière période d'activité, émis ou reçu un message SIP en liaison avec un établissement d'appel (étape E60).

Pour ce faire, à l'étape E60, le serveur SCC-AS 3 analyse dans la base 4 le type de message échangé lors de la dernière période d'activité associée à chaque terminal T1, T2 et T3 stocké dans la base 4 et l'instant auquel ce message a été échangé.

Dans l'exemple décrit de la figure 4, seul le message M1 est un message en relation avec un établissement d'appel (M1 est un message SIP INVITE). Le serveur SCC-AS 3 sélectionne donc le terminal T1 pour router la communication émise par l'utilisateur U2.

En revanche, si plusieurs terminaux sont associés à un message en relation avec un établissement d'appel, le serveur SCC-AS 3 sélectionne le terminal correspondant à la période d'activité la plus récente en relation avec un établissement d'appel.

Par ailleurs, si un seul terminal est enregistré dans la base 4 (E50, non), la communication est routée vers ce terminal, celui-ci correspondant au terminal ayant la période d'activité la plus récente (étape E70).

Dans un autre mode de réalisation de l'invention, le serveur SCC-AS 3 considère comme critère relatif à la nature de l'activité du terminal, l'envoi ou la réception lors de cette activité d'un message relatif à l'établissement d'une communication téléphonique, et ce indépendamment de la nature de la communication émise par le terminal T de l'utilisateur U2 que le serveur d'application cherche à router.

Dans un autre mode de réalisation de l'invention, le serveur SCC-AS 3 ne considère pas d'autre critère pour sélectionner le terminal vers lequel router la communication. Dans ce mode de réalisation, en référence à l'exemple illustré sur la figure 4, il sélectionne le terminal T3 pour router la communication.

La communication est ensuite routée vers le terminal sélectionné, c'est-à-dire dans l'exemple de la figure 4 vers le terminal T1, de façon connue en soi (étape E80).

On notera que dans le mode de réalisation décrit ici, la base associe à chaque terminal la dernière période d'activité de ce terminal sur le coeur de réseau IMS et le serveur SCC-AS 3 sélectionne le terminal vers lequel router la communication en analysant les données disponibles dans la table identifiant cette période d'activité (cf. instant t et type de message Msg). En variante la base 4 peut être maintenue par le serveur SCC-AS 3 de sorte à ne refléter que la dernière période d'activité du dernier terminal actif, de sorte que l'étape de sélection consiste à extraire de la base 4 le seul terminal répertorié dans cette base.

## Revendications

1. Procédé de gestion d'une communication destinée à un utilisateur (U1) auquel est attribué un identifiant (IdSIP1) sur un coeur de réseau de voix sur IP (IP-CN), ledit procédé étant mis en oeuvre par un serveur d'application (3) du coeur de réseau de voix sur IP par lequel transite ladite communication, ledit procédé comprenant une étape de sélection (E60,E70) dans une base de données (4), sur réception (E10) de cette communication, d'un terminal (T1,T3) relié à l'identifiant de l'utilisateur en vue de router (E80) ladite communication vers ce terminal, ladite base de données (4) associant à au moins un terminal (T1,T2,T3) enregistré sur le coeur de réseau de voix sur IP et relié à l'identifiant de l'utilisateur au moins une période d'activité de ce terminal sur le coeur de réseau de voix sur IP, le terminal sélectionné étant associé dans la base à la période d'activité la plus récente.

2. Procédé de gestion selon la revendication 1, dans lequel ladite base de données (4) est mise à jour, par le serveur d'application (3), périodiquement ou sur détection par le serveur d'application d'une période d'activité d'un terminal relié à l'identifiant de l'utilisateur sur le coeur de réseau de voix sur IP.

3. Procédé de gestion selon la revendication 1, dans lequel au cours de l'étape de sélection (E60), on sélectionne le terminal (T1) relié à l'identifiant de l'utilisateur associé à la période d'activité la plus récente, vérifiant en outre un critère prédéterminé relatif à la nature de l'activité du terminal sur cette période.

4. Procédé de gestion selon la revendication 3, dans lequel, au cours de l'étape de sélection, on sélectionne le terminal (T1) relié à l'identifiant de l'utilisateur associé à la période d'activité la plus récente en relation avec un établissement d'une communication avec un autre terminal.

5. Procédé de gestion selon la revendication 3, dans lequel le critère prédéterminé porte sur la nature d'un message émis ou reçu par le terminal durant cette période.

6. Procédé de gestion selon la revendication 1, comprenant en outre une étape de routage (E80) de la communication vers le terminal sélectionné.

7. Procédé de gestion selon la revendication 1, dans lequel le coeur de réseau (IP-CN) de voix sur IP est un coeur de réseau IMS et le serveur d'application (3) est un serveur SCC-AS défini par le standard 3GPP.

8. Programme d'ordinateur comportant des instructions pour l'exécution des étapes du procédé d'échange selon la revendication 1 lorsque ledit programme est exécuté par un ordinateur.

9. Support d'enregistrement lisible par un ordinateur sur lequel est enregistré un programme d'ordinateur comprenant des instructions pour l'exécution des étapes du procédé d'échange selon la revendication 1.

10. Serveur d'application (3) d'un coeur de réseau de voix sur IP (IP-CN), apte à gérer une communication transitant par lui et destinée à un utilisateur (U1) auquel est attribué un identifiant (IdSIP1) sur le coeur de réseau de voix sur IP, ledit serveur comprenant des moyens, activés sur réception de cette communication, de sélection dans une base de données (4), d'un termina(T1,T3) relié à l'identifiant de l'utilisateur en vue de router ladite communication vers ce terminal, ladite base de données (4) associant à au moins un terminal (T1,T2,T3) enregistré sur le coeur de réseau de voix sur IP et relié à l'identifiant de l'utilisateur au moins une période d'activité de ce terminal sur le coeur de réseau de voix sur IP, le terminal sélectionné étant associé dans la base à la période d'activité la plus récente.

11. Système (1) d'un coeur de réseau de voix sur IP comprenant :
- un serveur d'application (3) selon la revendication 10 ; et
- une base de données (4) élaborée par ledit serveur d'application, associant à au moins un terminal (T1,T2,T3) enregistré sur le coeur de réseau de voix sur IP et relié à un identifiant (IdSIP1) d'un utilisateur sur ce coeur de réseau de voix sur IP, au moins une période d'activité de ce terminal sur le coeur de réseau de voix sur IP, ladite base de données étant utilisée pour sélectionner un terminal vers lequel router une communication transitant par le serveur d'application et destinée à un utilisateur identifié sur le coeur de réseau de voix sur IP.

12. Système (1) selon la revendication 11, dans lequel le coeur de réseau (IP-CN) de voix sur IP est un coeur de réseau IMS et le serveur d'application (3) est un serveur SCC-AS défini par le standard 3GPP.

## Patentansprüche

1. Verfahren zur Verwaltung einer Kommunikation, die für einen Benutzer (U1) bestimmt ist, dem ein Identifikator (IdSIP1) auf einem IP-Sprachkernnetz (IP-CN) zugewiesen ist, wobei das Verfahren durch einen Anwendungsserver (3) des IP-Sprachkernnetzes, über das die Kommunikation verläuft, eingesetzt wird, wobei das Verfahren einen Schritt der Auswahl (E60, E70) eines mit dem Identifikator des Benutzers verbundenen Terminals (T1, T3) in einer Datenbasis (4) beim Empfang (E10) dieser Kommunikation umfasst, um die Kommunikation zu diesem Terminal zu routen (E80), wobei die Datenbasis (4) mindestens einem auf dem IP-Sprachkernnetz aufgezeichneten und mit dem Identifikator des Benutzers verbundenen Terminal (T1, T2, T3) mindestens eine Aktivitätsperiode dieses Terminals auf dem IP-Sprachkernnetz zuweist, wobei das ausgewählte Terminal in der Basis der rezentesten Aktivitätsperiode zugewiesen wird.

2. Verwaltungsverfahren nach Anspruch 1, bei dem die Datenbasis (4) durch den Anwendungsserver (3) periodisch oder bei Erfassung einer Aktivitätsperiode eines mit dem Identifikator des Benutzers verbunden Terminals auf dem IP-Sprachkernnetz durch den Anwendungsserver aktualisiert wird.

3. Verwaltungsverfahren nach Anspruch 1, bei dem während des Auswahlschrittes (E60) das Terminal (T1) ausgewählt wird, das mit dem Identifikator des Benutzers, der der rezentesten Aktivitätsperiode zugewiesen ist, verbunden ist, wobei ferner ein vorbestimmtes Kriterium in Bezug auf die Natur der Aktivität des Terminals über diese Periode überprüft wird.

4. Verwaltungsverfahren nach Anspruch 3, bei dem während des Auswahlschrittes das Terminal (T1) ausgewählt wird, das mit dem Identifikator des Benutzers, der der rezentesten Aktivitätsperiode zugewiesen ist, verbunden ist, in Verbindung mit einer Erstellung einer Kommunikation mit einem weiteren Terminal.

5. Verwaltungsverfahren nach Anspruch 3, bei dem das vorbestimmte Kriterium die Natur einer von dem Terminal während dieser Periode entsandten oder empfangenen Nachricht betrifft.

6. Verwaltungsverfahren nach Anspruch 1, ferner umfassend einen Schritt des Routens (E80) der Kommunikation zu dem ausgewählten Terminal.

7. Verwaltungsverfahren nach Anspruch 1, bei dem das IP-Sprachkernnetz (IP-CN) ein IMS-Kernnetz ist, und der Anwendungsserver (3) ein SCC-AS-Server, der durch den Standard 3GPP definiert ist, ist.

8. Computerprogramm, umfassend Befehle für die Ausführung der Schritte des Austauschverfahrens nach Anspruch 1, wenn das Programm von einem Computer ausgeführt wird.

9. Aufzeichnungsträger, der von einem Computer lesbar ist, auf dem ein Computerprogramm aufgezeichnet ist, umfassend Befehle für die Ausführung der Schritte des Austauschverfahrens nach Anspruch 1.

10. Anwendungsserver (3) eines IP-Sprachkernnetzes (IP-CN), der geeignet ist, eine durch ihn verlaufende Kommunikation zu verwalten, die für einen Benutzer (U1) bestimmt ist, dem ein Identifikator (IdSIP1) auf dem IP-Sprachkernnetz zugewiesen ist, wobei der Server Mittel umfasst, die bei Empfang dieser Kommunikation aktiviert werden, um in einer Datenbasis (4) ein Terminal (T1, T3), das mit dem Identifikator des Benutzers verbunden ist, auszuwählen, um die Kommunikation zu diesem Terminal zu routen, wobei die Datenbasis (4) mindestens einem auf dem IP-Sprachkernnetz aufgezeichneten Terminal (T1, T2, T3), das mit dem Identifikator des Benutzers verbunden ist, mindestens eine Aktivitätsperiode dieses Terminals auf dem IP-Sprachkernnetz zuweist, wobei das ausgewählte Terminal in der Basis der rezentesten Aktivitätsperiode zugewiesen ist.

11. System (1) eines IP-Sprachkernnetzes, umfassend:
- einen Anwendungsserver (3) nach Anspruch 10; und
- eine Datenbasis (4), die vom Anwendungsserver ausgearbeitet ist und mindestens einem Terminal (T1, T2, T3), das auf dem IP-Sprachkernnetz aufgezeichnet und mit einem Identifikator (IdSIP1) eines Benutzers auf dem IP-Sprachkernnetz verbunden ist, mindestens eine Aktivitätsperiode dieses Terminals auf dem IP-Sprachkernnetz zuweist, wobei die Datenbasis verwendet wird, um ein Terminal auszuwählen, zu dem eine durch den Anwendungsserver verlaufende Kommunikation, die für einen auf dem IP-Sprachkernnetz identifizierten Benutzer bestimmt ist, zu routen ist.

12. System (1) nach Anspruch 11, bei dem das IP-Sprachkernnetz (IP-CN) ein IMS-Kernnetz ist, und der Anwendungsserver (3) ein SCC-AS-Server ist, der durch den Standard 3GPP definiert ist.

## Claims

1. Method for managing a communication intended for a user (U1) who has an associated identifier (IdSIP1) on a voice-over-IP network core (IP-CN), said method being implemented by an application server (3) of the voice-over-IP network core through which said communication passes, said method comprising a step of selection (E60, E70), from a database (4), on reception (E10) of this communication, of a terminal (T1, T3) that is connected to the identifier of the user for the purpose of routing (E80) said communication to this terminal, said database (4) associating with at least one terminal (T1, T2, T3) registered on the voice-over-IP network core and connected to the identifier of the user, at least one period of activity of this terminal on the voice-over-IP network core, the selected terminal being associated, in the base, with the most recent period of activity.

2. Management method according to Claim 1, in which said database (4) is updated, by the application server (3), periodically or on detection by the application server of a period of activity of a terminal connected to the identifier of the user on the voice-over-IP network core.

3. Management method according to Claim 1, in which, in the course of the selection step (E60), the terminal (T1) connected to the identifier of the user associated with the most recent period of activity is selected, furthermore checking a predetermined criterion relating to the nature of the activity of the terminal over this period.

4. Management method according to Claim 3, in which, in the course of the selection step, the terminal (T1) connected to the identifier of the user associated with the most recent period of activity in connection with set-up of a communication with another terminal is selected.

5. Management method according to Claim 3, in which the predetermined criterion relates to the nature of a message sent or received by the terminal during this period.

6. Management method according to Claim 1, furthermore comprising a step of routing (E80) of the communication to the selected terminal.

7. Management method according to Claim 1, in which the voice-over-IP network core (IP-CN) is an IMS network core and the application server (3) is an SCC-AS server defined by the 3GPP standard.

8. Computer program having instructions for executing the steps of the interchange method according to Claim 1 when said program is executed by a computer.

9. Computer-readable recording medium on which is recorded a computer program comprising instructions for executing the steps of the interchange method according to Claim 1.

10. Application server (3) of a voice-over-IP network core (IP-CN), which is capable of managing a communication passing through it that is intended for a user (U1) who has an associated identifier (IdSIP1) on the voice-over-IP network core, said server comprising means, which are activated on reception of this communication, for selecting, from a database (4), a terminal (T1, T3) that is connected to the identifier of the user for the purpose of routing said communication to this terminal, said database (4) associating with at least one terminal (T1, T2, T3) registered on the voice-over-IP network core and connected to the identifier of the user, at least one period of activity of this terminal on the voice-over-IP network core, the selected terminal being associated in the base, with the most recent period of activity.

11. System (1) of a voice-over-IP network core comprising:
- an application server (3) according to Claim 10; and
- a database (4) that is set up by said application server, associating with at least one terminal (T1, T2, T3) registered on the voice-over-IP network core and connected to an identifier (IdSIP1) of a user on this voice-over-IP network core, at least one period of activity of this terminal on the voice-over-IP network core, said database being used in order to select a terminal to which to route a communication passing through the application server and intended for a user identified on the voice-over-IP network core.

12. System (1) according to Claim 11, in which the voice-over-IP network core (IP-CN) is an IMS network core and the application server (3) is an SCC-AS server defined by the 3GPP standard.
